# EUROPEAN PATENT APPLICATION

(11) **EP 2 096 411 A2**
(43) Date of publication of application: **02.09.2009**
(21) Application number: 08022302.7
(22) Date of filing: 22.12.2008
(51) Int. Cl.: G01C 21/26

(54) **Navigation apparatus and navigation program**

(30) Priority: 28.02.2008 JP 2008048202
(71) Applicant: Aisin AW Co., Ltd., Fujii-cho Anjo-shi, Aichi 444-1192 (JP)
(72) Inventor: Kato, Kiyohide, Okazaki-shi, Aichi 444-8564 (JP)
(74) Representative: Kramer - Barske - Schmidtchen

(57) **Abstract**

If it is determined that a course change at a branch point (X) is necessary and a vehicle is traveling on a road (A) in which a lane (C3) is added to correspond to a road (B) which is taken after the course change (road before the branch point), "direction guidance" is provided before a road section in which the lane (C3) is added (added lane section) and "lane guidance" is provided in the added lane section. As above, by switching the "direction guidance" and the "lane guidance" depending on whether the vehicle has reached the added lane section or not, and by providing either one of the guidances, a driver can recognize the guidance without confusion. Particularly, when the branch point (X) is branched off at a narrow angle and when the added lane is a lane (C3) dedicated to the road (B) which is taken after the course change, by providing the lane guidance, instead of the direction guidance indicating left or right, the guidance becomes easier to understand.

## Description

### BACKGROUND OF THE INVENTION

### 1. Field of the Invention

The present invention relates to a navigation apparatus and a navigation program providing guidance regarding a travel route to a vehicle.

### 2. Description of the Related Art

In recent years, a navigation apparatus has been in wide use to guide a vehicle.
The navigation apparatus has a function of searching a route from a place of departure to a destination, a function of detecting a position of a vehicle by using a global positioning system (GPS) satellite or a sensor such as a gyro sensor, a function of displaying, on a map, the route to the destination and a current position of the vehicle, a guidance function of providing guidance regarding a direction to which a course is changed with respect to a branch intersection based on the searched travel route to the destination, and so on.

A navigation apparatus proposed in Japanese Patent Application Publication No. JP-A-2000-18596 provides guidance regarding the course change direction (branch point guidance), and in addition, it has a lane guidance function. The lane guidance function is a function of providing guidance, when there are a plurality of lanes on which a vehicle can travel, regarding on which lane the vehicle should travel.
For example, if there are two lanes in which only one lane of right side is a right-turn dedicated lane, and the vehicle is currently traveling on a lane of left side, the lane guidance is conducted following the guidance regarding the course change direction (branch guidance), such as "700 m ahead, go to the right direction. Move to the right lane."

### SUMMARY OF THE INVENTION

In the navigation apparatus disclosed in Japanese Patent Application Publication No. JP-A2000-18596, since both the guidance regarding the course change direction (branch guidance) and the lane guidance are always conducted even in a case where a lane is added to correspond to a road which is taken after the course change, the guidances are overlapped, which may rather make it hard to understand the guidance.
Particularly, when the road which is taken after the course change is branched off at a narrow angle with respect to a road on which the vehicle is currently traveling (or a road which is taken when the vehicle travels straight without changing its course), an operation amount of steering wheel is small, so that if direction guidance indicating a right/left turn ("Go to the left/right direction ... m ahead.") is provided, a driver may feel something strange.
Further, similarly, when the vehicle is only required to travel along the lane, such as when it travels on a branch of an expressway, an exit-only road, and a connected road in a two-level crossing, it is also unsuitable to provide the direction guidance indicating the right/left turn.

Accordingly, it is an object of the present invention to provide more clear guidance when a lane is added to correspond to a road which is taken after a course change.

In the present invention, by switching guidance contents between in a road section in which a lane is added and in a road section in which the lane is not yet added, it is possible to conduct route guidance being easy to understand which corresponds to a current position of a vehicle.
Further, if direction guidance regarding a course to be changed is provided in the road section in which the lane is not yet added and lane guidance is provided in the road section in which the lane is added, it is possible to conduct route guidance being easier to understand which corresponds to the current position of the vehicle.

### BRIEF DESCRIPTION OF THE DRAWINGS

FIG. 1 is a system configuration diagram of a navigation apparatus;
FIG. 2 is an explanatory view about typical roads in which a switching between direction guidance and lane guidance is conducted and guidance contents according to the present embodiment; and
FIG. 3 is a flow chart showing contents of a route guidance processing.

### DETAILED DESCRIPTION OF THE PREFERRED EMBODIMENTS

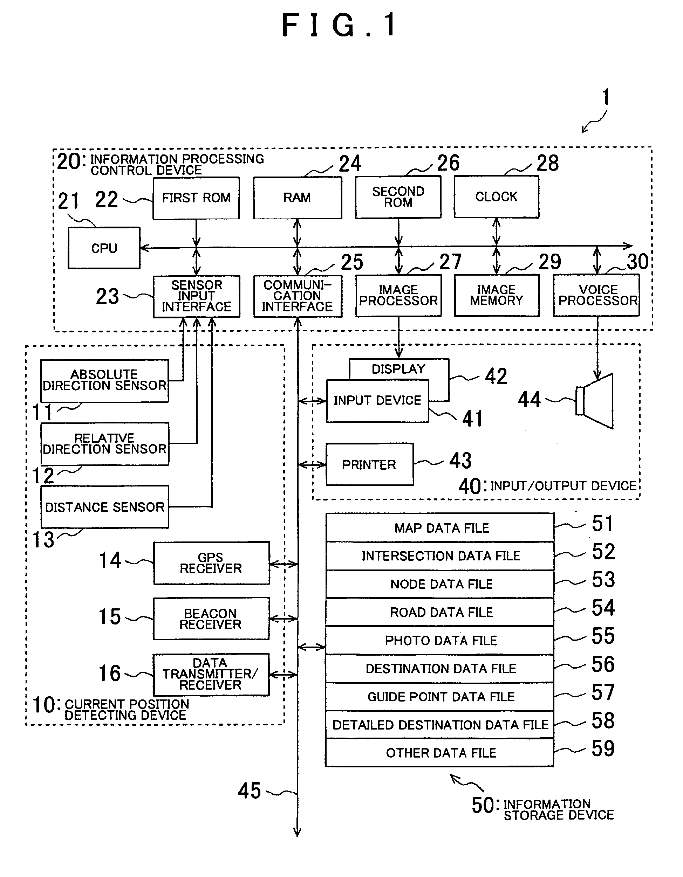

Hereinafter, an embodiment of a navigation apparatus of the present invention will be explained with reference to FIG. 1 to FIG. 3.

### (1) Outline of Embodiment

A travel route to a destination is obtained through a route search processing by an own apparatus or through a communication with an information center, and route guidance is provided with respect to a branch point to be a guidance target on the travel route at an initial position (2 km before the branch point), at an intermediate position (1 km before the branch point), and at a proximate position (500 m before the branch point).
As the route guidance, if it is determined that a course change at the branch point is necessary and a vehicle is traveling on a road in which a lane is added to correspond to a road which is taken after the course change (road before the branch point), "direction guidance" is provided before a road section in which the lane is added (added lane section) and "lane guidance" is provided in the added lane section.
As above, the "direction guidance" and the "lane guidance" are switched depending on whether the vehicle reaches the added lane section or not, and either of the guidances is provided, so that a driver can recognize the guidance without confusion.
Note that area guidance such as "Go toward XY area." may be provided together with both the guidances, and it may be provided together with only the lane guidance.
Especially, when the branch point is branched off at a narrow angle and when the added lane is a lane dedicated to the road which is taken after the course change, by providing the lane guidance, instead of the direction guidance indicating left or right, the guidance becomes easier to understand.

### (2) Details of Embodiment

FIG. 1 is a system configuration diagram of a navigation apparatus to which the present embodiment is applied.
The navigation apparatus 1 is mounted on a vehicle, and as shown in FIG. 1, it is provided with a current position detecting device 10, an information processing control device 20, an input/output device 40, and an information storage device 50.
Firstly, the current position detecting device 10 has the following configuration. An absolute direction sensor 11 is, for example, a geomagnetic sensor which detects in which direction the vehicle is positioned, based on the detection of the N direction by using a magnet, and any unit detecting an absolute direction can be used.

A relative direction sensor 12 detects, for example, whether the vehicle has turned at an intersection or not, and may be an optical rotation sensor or a rotation-type resistance volume attached to a rotation portion of a steering wheel, or may be an angle sensor attached to a wheel portion.
Further, a gyro sensor detecting an angle change by using an angular speed may also be used. That is, any unit capable of detecting an angle change amount relative to a reference angle (absolute direction) is usable.
A distance sensor 13 may be, for example, a sensor detecting the rotation of the wheel to count the number of the rotations, or a sensor detecting an acceleration to perform integration twice. That is, any unit capable of measuring a movement distance of the vehicle may be used.

A global positioning system (GPS) receiver 14 receives signals from an artificial satellite and is capable of obtaining various pieces of information such as a signal transmission time, position information of the receiver, a moving speed of the receiver, and a traveling direction of the receiver.
A beacon receiver 15 receives signals transmitted from transmitters installed at specific points. In particular, the beacon receiver 15 can obtain VICS information, and can obtain information related to the traveling of the vehicle, such as traffic jam information, current position information, and parking lot information.

A data transmitter/receiver 16 communicates with an external part of the vehicle by using a telephone line or a radio wave to exchange information.
For example, the data transmitter/receiver 16 can be used in various ways such as being used for a car phone, ATIS, VICS, GPS correction, and inter-vehicle communication, and is capable of inputting/outputting information related to the traveling.
Next, the information processing control device 20 is a unit which performs arithmetic operations and a control based on information input from the current position detecting device 10 and the input/output device 40, and based on information stored in the information storage device 50, and performs a control so that the result of arithmetic operations is output to output units such as a display 42, a printer 43, and a speaker 44.

The information processing control device 20 has the following configuration.
A central processing unit (CPU) 21 performs the overall arithmetic operations and controls for the whole navigation apparatus.
A first ROM 22 stores programs related to the navigation, and in particular, it stores a navigation program regarding a detection of the current position, a search for the route, display guidance, route guidance in the present embodiment, and so on.
A sensor input interface 23 is a unit receiving information from the current position detecting device 10.

The RAM 24 is a storage unit storing information input by a user through a later-described input device 41, such as information on a destination and information on a via point, and storing the result of the arithmetic operations which is performed by the CPU 21 based on the information input by the user, the result of the route search, or map information read from the information storage device 50.
A communication interface 25 is a unit inputting/outputting information from the current position detecting device 10, in particular, information obtained from an external part.

A second ROM 26 stores a program related to the navigation, in particular, a navigation program related to voice guidance. Note that the first ROM 22 and the second ROM 26 may be configured by one common ROM.
An image processor 27 is a processing unit processing vector information, which is processed by the CPU 21, into image information.
A clock 28 keeps time.
An image memory 29 is a unit storing the image information processed by the image processor.
A voice processor 30 processes voice information read from the information storage device 50 to output the resultant to the speaker 44.

The input/output device 40 is structured from the input device 41 to which the user inputs data such as a destination, a via point, and a search condition; the display 42 displaying an image; the printer 43 printing information; and the speaker 44 outputting voice. The input device 41 includes, for example, a touch panel, a touch switch, a joystick, a key switch, or the like.
On the display 42, a map of the area around the current position and a travel route to the destination are displayed.

The information storage device 50 is connected to the information processing control device 20 via a transmission path 45.
The information storage device 50 stores a map data file 51, an intersection data file 52, a node data file 53, a road data file 54, a photo data file 55, a destination data file 56, a guide point data file 57, a detailed destination data file 58, and other data file 59.
The information storage device 50 is generally structured from a DVD-ROM or a CD-ROM being an optical storage medium, or a hard disk being a magnetic storage medium, or the like, but may be structured from various types of information storage media such as a magneto-optical disk or various types of semiconductor memories.
Note that it is possible that the information storage device 50 is structured from a hard disk, a flash memory, or the like being a rewritable storage medium to store information which is required to be rewritten, and for storing the other information being fixed, a ROM such as a CD-ROM or a DVD-ROM is used as the information storage device 50.

The map data file 51 stores map data such as a national road map, a road map of each area, or a residence map. The road map includes respective roads such as major highways, expressways and narrow streets, and landmark objects (facilities and the like) on the roads. The residence map is a town map showing graphics representing outlines of buildings and the like on the roads, road names, and so on. The narrow street is, for instance, a relatively narrow road being equal to or under the class of national road or prefectural road with a road width of a predetermined value or smaller, and is a road having no traffic restriction information such as "one-way traffic" added thereto.

The intersection data file 52 stores data related to intersections, such as geographical positional coordinates and names of intersections, the node data file 53 stores geographical coordinate data or the like of each node which is used for the route search on a map, and the photo data file 55 stores image data of photos of various facilities, sightseeing spots, or places such as major intersections whose visual display is required.
The road data file 54 stores data related to roads, such as positions, types, and the number of lanes of the roads and connection relations among the respective roads.

The destination data file 56 stores data such as positions, names, and the like of places, facilities, and so on which are highly likely to be destinations, such as major sightseeing spots, buildings, and companies and offices listed in telephone directories.
The guide point data file 57 stores guide data of points where guidance is necessary, such as contents of guide boards installed on roads and guidance of branch points.
The detailed destination data file 58 stores detailed data regarding the destinations stored in the aforementioned destination data file 56.

In the navigation apparatus configured as above, the route guidance is conducted as follows.
The navigation apparatus detects a current position using the current position detecting device 10, reads map information of the area around the current position from the map data file 51 of the information storage device 50, and displays the map information on the display 42.
Subsequently, when a destination is input through the input device 41, the information processing control device 20 searches (performs arithmetic operations regarding) a plurality of candidates for a travel route from the current position to the destination, displays the candidates for the travel route on the map displayed on the display 42, and when a driver selects either of the travel routes, it stores the selected travel route in the RAM 24, to thereby obtain the travel route (route obtaining unit).

Note that the information processing control device 20 may obtain the travel route by transmitting the current position of the vehicle (or an input place of departure) and the destination to an information processing center, and by receiving a travel route to the destination which was searched in the information processing center. In this case, a communication of the destination and the travel route is conducted by a radio communication via the communication interface 25.
Further, a travel route from the place of departure to the destination may be searched using an information processing device such as a home personal computer or the like, stored in a storage medium such as a USB memory, and obtained via a corresponding storage medium reading device. In this case, the storage medium reading device is connected to the information processing control device 20 via the transmission path 45.

When the vehicle travels, route guidance is performed by tracking the current position detected by the current position detecting device 10.
In the route guidance, the vehicle position on the map is specified by map matching between road data corresponding to the searched travel route and the current position detected by the current position detecting device 10, a map of the area around the current vehicle position is displayed on the display 42, and the searched travel route and the current position are displayed on the map.
Further, based on the relationship between the searched travel route and the current position, it is determined whether or not guidance is required, namely, it is determined whether or not travel route guidance at a predetermined course changing point or the like and area guidance are required when the vehicle travels in a straight line for a predetermined distance or more. When it is determined that the guidance is required, guidance is provided by being displayed on the display 42 and by voice.

Hereinafter, a route guidance processing conducted when a course change is made in the present embodiment will be described.
In the route guidance processing of the present embodiment, there are lane guidance being performed when a vehicle changes its course by traveling on an added lane, and direction guidance other than the lane guidance. The direction guidance is guidance conducted in normal route guidance.
Note that when providing guidance regarding a road which is taken after the course change (traveling road after passing through a branch point), either one of the lane guidance and the direction guidance is provided, but, depending on a branch point, both the lane guidance and the direction guidance, and area guidance such as "Go toward XY area." may be provided together.

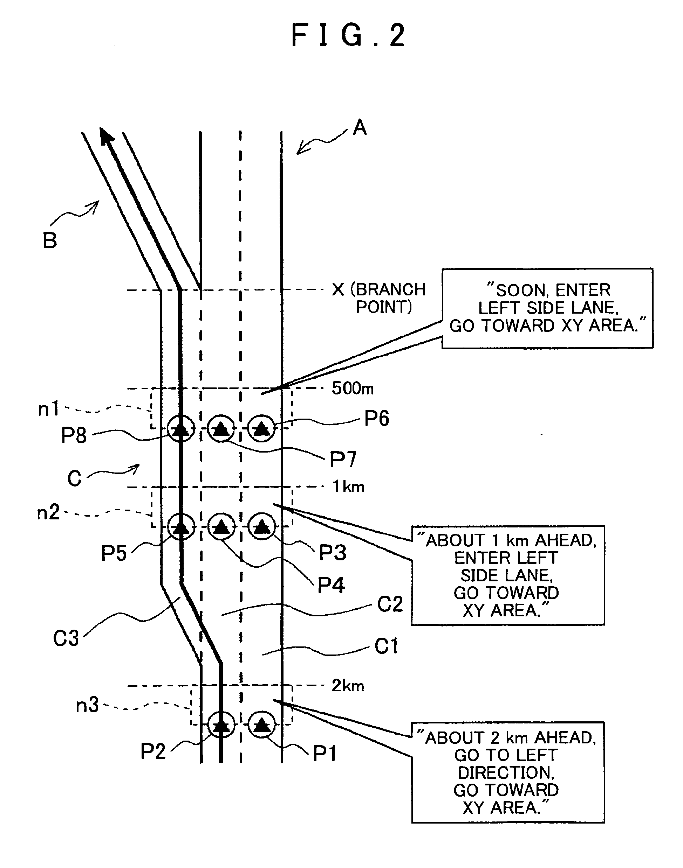

FIG. 2 is a view showing typical roads in which a switching between the direction guidance and the lane guidance is conducted and guidance contents in the route guidance processing according to the present embodiment.
In FIG. 2, roads A, B and C are connected at a branch point X, from which the road A is continued from the road C (connected along the road) and at which the road B is branched off from the roads C to A.
Further, to correspond to the branched road B, a lane C3 is added to the road C before the branch. Namely, the number of lanes of the road C is changed from two to three since the lane C3 corresponding to the road B is added to lanes C1 and C2 at a point a predetermined distance before the branch point X.

In the route guidance processing of the present embodiment, it is designed to provide the route guidance by voice at a plurality of points before the branch point X which is a target of the course change with each of the points being apart from the branch point X by a predetermined distance. Concretely, the voice guidance is conducted at three points, which are, a point 500 m before the branch point X (proximate guidance), a point 1 km before the branch point X (intermediate guidance), and a point 2 km before the branch point X (initial guidance). It should be noted that the predetermined distances before the branch point X to be the guide point can be any predetermined distances n1, n2 and n3 (n1<n2<n3). Further, it is possible to notify the existence of the corresponding branch point at a point of, for instance, 5 m before the branch point (branch point entering guidance) by a sound such as a chime sound which sounds like "pong", instead of by the voice guidance.

In FIG. 2, P1 to P8 are current position marks each indicating a current position of the vehicle, and one current position mark is displayed on one map by corresponding to an actual current position on the display 42.
When the initial guidance is provided at the positions P1 and P2 located 2 km before the branch point X, since the vehicle position is located in a road section before a road section in which the lane C3 is added (added lane section), the information processing control device 20 provides the initial guidance by normal direction guidance.
For instance, in an example of FIG. 2, the direction guidance and area guidance are conducted following guidance regarding a distance, such as "About 2 km ahead, go to the left direction, go toward XY area." Note that the area guidance is conducted when area information corresponding to the branch point X exists in the road data file 54.

Meanwhile, when providing the intermediate guidance and the proximate guidance respectively at the positions of P3 to P5 and P6 to P8, since the vehicle travels and the position thereof is in the road section in which the lane C3 is added (added lane section), the route guidance is conducted with the lane guidance which is switched from the direction guidance.
Namely, in the intermediate guidance at the positions P3 to P5, the lane guidance of "About 1 km ahead, enter the left side lane, go toward XY area." is provided, and in the proximate guidance at the positions P6 to P8, the lane guidance of "Soon, enter the left side lane, go toward XY area." is provided.

As above, when the lane of the guidance target road of the course change (road before the branch point) C is added to correspond to the road B which is taken after the course change (lane C3), the normal direction guidance is provided in the road section in which the lane is not yet added, and in the added lane section, the lane guidance is conducted by being switched from the direction guidance. Accordingly, it is possible to avoid a confusion generated by overlapped guidances. Further, it works especially well when the added lane C3 is set as a lane dedicated to the road B which is taken after the course change.
Further, it is possible to eliminate a sense of strangeness which is generated when the direction guidance is provided when the road which is taken after the course change is branched off at a narrow angle with respect to the road before the branch point.

Note that in the route guidance of the present embodiment, when the lane before the branch point is added to correspond to the road which is taken after the course change, the direction guidance is conducted in the section before the added lane section and the lane guidance is conducted in the added lane section.
Therefore, even when the lane is provided to correspond to the road which is taken after the course change, if the number of lanes is not increased before the corresponding branch point, the switching from the direction guidance to the lane guidance is not conducted.
On the contrary, when the lane is added and the position at which the initial guidance is provided is in the added lane section, the lane guidance, instead of the direction guidance, is conducted.

Next, a route guidance processing in the present embodiment will be described.

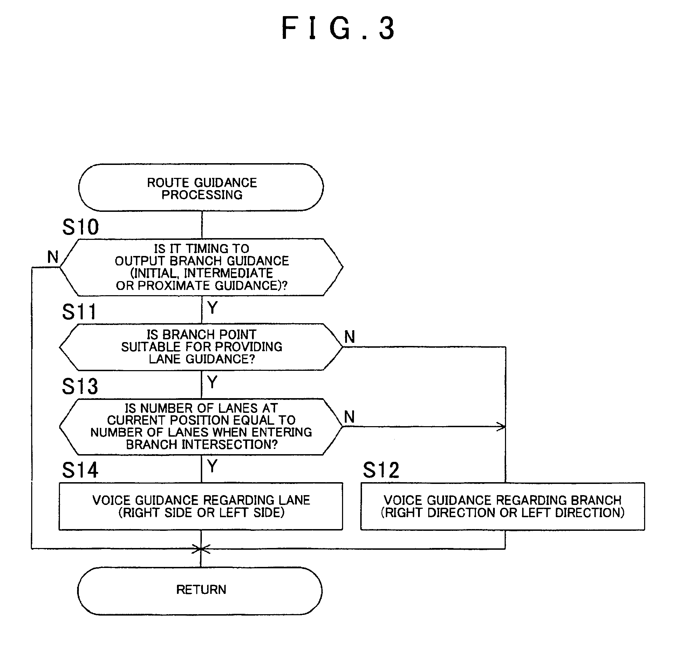

FIG. 3 is a flow chart showing contents of the route guidance processing. The route guidance processing is executed when a travel route to a destination is obtained and a vehicle starts traveling.
The information processing control device 20 obtains a current position of the vehicle from the current position detecting device 10, and determines whether or not it is a timing to output branch guidance (initial guidance, intermediate guidance or proximate guidance) (step 10).
Note that as described in FIG. 2, in the present embodiment, the initial guidance, the intermediate guidance and the proximate guidance are set to be provided at a point 2 km before the branch point X, at a point 1 km before the branch point X, and at a point 500 m before the branch point X, respectively. It should be noted that the guidance is provided at the point in time where the vehicle passes through the respective guide points, but in actuality, the guidance is provided in a certain range of region apart from each of the guide points.

When it is not a timing to output the branch guidance (step 10; N), the information processing control device 20 returns to the main routine.
Meanwhile, when it is determined to be the timing to output the branch guidance (step 10; Y), the information processing control device 20 determines whether or not a branch point is the one to be a target of lane guidance (step 11). Namely, the information processing control device 20 determines whether or not a road located before the branch point and on which the vehicle is currently traveling is a road in which a lane is added to correspond to a road which is taken after a course change (lane addition determining unit).

When the branch point is not the one suitable for providing the lane guidance, namely, when the lane corresponding to the road which is taken after the course change is not added (step 11; N), the information processing control device 20 conducts the direction guidance, as the branch guidance, which provides guidance indicating the right direction or left direction by voice (step 12), and returns to the main routine.

Meanwhile, when the lane is added (step 11; Y), the information processing control device 20 determines whether the number of lanes at a position on the road corresponding to the current position and the number of lanes when entering the branch point (branch intersection) are equal or not (step 13).
Note that the number of lanes at the current position and the number of lanes when entering the branch point are respectively obtained from the road data file 54.

When both the numbers of lanes are equal (step 13; Y), the information processing control device 20 provides the lane guidance corresponding to the contents of guidance (initial guidance, intermediate guidance and proximate guidance) (step 14), and returns to the main routine.
Meanwhile, when both the numbers of lanes are not equal (when the number of lanes at the current position is smaller than the other one) (step 13; N), since the vehicle has not yet reached the added lane section, the information processing control device 20 provides normal direction guidance (step 12), and returns to the main routine.

According to the route guidance processing, by determining whether or not the number of lanes at the current position of the vehicle is equal to the number of lanes before the branch point being the guidance target, it is possible to easily determine whether the road section is the one in which the lane is added or not.

The embodiment of the present invention has been described above, but, the present invention is not limited to the embodiment and various modifications can be made.
For instance, in the explained embodiment, a case is described where the lane guidance and the direction guidance are switched depending on whether the road section is the added lane section or not, when the road on which the vehicle is traveling is the guidance target road of the course change and the lane is added to correspond to the road which is taken after the course change.
On the other hand, it is also possible to perform the switching between the lane guidance and the direction guidance depending on whether the road section is the added lane section or not, when the road on which the vehicle is traveling is the guidance target road of the course change, the lane is added to correspond to the road which is taken after the course change, and further, the road which is taken after the course change is branched off at a narrow angle with respect to a road which is taken when the vehicle travels without changing its course.

In this case, when the road is a branch path which branches off with respect to a predetermined road and the branch path is a narrow-angle branch road (branch path having an angle being equal to a predetermined angle or smaller with respect to the predetermined road), the road data file 54 further stores information indicating the above (a narrow-angle flag, for instance). Based on whether the narrow-angle flag exists or not, it is determined whether or not the road which is taken after the course change is the narrow-angle branch road.
It should be noted that the determination whether or not the road is the narrow-angle branch road can be made with respect to each branch by storing angles among the respective roads and by determining whether or not the angles are equal to or smaller than a predetermined value.

Further, it is also possible to perform the switching between the lane guidance and the direction guidance depending on whether the road section is the added lane section or not, when the road on which the vehicle is traveling is the guidance target road of the course change, the lane is added to correspond to the road which is taken after the course change, and further, the road which is taken after the course change is a road dedicated to the added lane.
In this case, the road which is taken after the course change may be provided with only the lane in the direction of the course change and not provided with an opposite lane, or it may be provided with both the lanes. In either case, the road data file 54 stores data indicating whether or not the road is the one in the direction of the course change satisfying the above conditions. The data is stored by being associated with the road data of the corresponding road or the corresponding branch point.

It is also possible that the travel lane is determined (travel lane determining unit) and the contents of the lane guidance are changed in accordance with the lane on which the vehicle is traveling in the added lane section.
For instance, when the vehicle is traveling on a lane other than the added lane, guidance which prompts the lane change such as "About Z km ahead/Soon, enter the left side/right side lane, go toward XY area." is conducted, and when the vehicle is traveling on the added lane, guidance which guides to travel along the lane such as "Keep traveling on the current lane." is conducted.

In this case, the current travel lane is determined based on, for instance, the number of white lines existing in the left/right of the vehicle which are recognized by a captured image of a rear or front of the vehicle captured by an imaging device mounted on the vehicle, and the number of lanes in the road data.
Further, it is also possible to determine the lane based on a signal received from the beacon arranged on the road.

Further, when the vehicle is traveling on the added lane, it is only required to travel on the current lane, so that it is possible that the lane guidance itself is designed not to be conducted.
In this case, it is possible to design such that only the area guidance is provided, or the area guidance is not provided either.

Further, when the added lane is a lane dedicated to a specific road which is taken after the branch, and there is no need to change the course toward the specific road, the contents of the lane guidance can be changed in accordance with the determined travel lane in the added lane section.
For instance, when the vehicle is traveling on the added lane, the lane guidance is provided to prompt the vehicle to move to another lane or an appropriate lane.
Meanwhile, when the vehicle is traveling on another lane or an appropriate lane other than the added lane, guidance which recommends to keep traveling on the current lane or/and guidance which prompts the vehicle not to change the lane to the added lane is (are) provided.

Further, a case where the branch point X is a junction of three roads is explained in FIG. 2. However, also in a case of making a right/left turn at an intersection and a lane used for making a left turn or right turn is added, it is also possible to conduct the direction guidance and the lane guidance by switching them according to whether or not the current position of the vehicle is in the added lane section, similarly as in the explained embodiment and the aforementioned modified example.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation apparatus, comprising:
a route obtaining unit (20) adapted to obtain a travel route;
a current position obtaining unit (10) adapted to obtain a current position (P1 to P8) of a vehicle;
a route guidance unit (20) adapted to provide guidance regarding the obtained travel route corresponding to the obtained current position (P1 to P8);
a course change guidance determining unit (20) adapted to determine whether or not a road on which the vehicle is traveling is a guidance target road (C) of a course change in the obtained travel route; and
a lane addition determining unit (20) adapted to determine, when the road on which the vehicle is traveling is the guidance target road (C) of the course change, whether or not a lane (C3) is added to correspond to a road (B) which is taken after the course change,
the route guidance unit (20) adapted to switch, when it is determined that the lane (C3) is added, guidance contents between in a road section in which the lane is added and in a road section in which the lane (C3) is not yet added.

2. The navigation apparatus according to claim 1, wherein
the route guidance unit (20) comprises a lane number determining unit (20) adapted to determine the number of lanes based on road data (54), in which
the guidance contents are switched between a road section set as the road section in which the lane (C3) is not yet added when a current number of lanes is smaller than the number of lanes before the course change and a road section set as the road section in which the lane (C3) is added when the current number of lanes is equal to the number of lanes before the course change.

3. The navigation apparatus according to claim 1 or 2, wherein
the route guidance unit (20) is adapted to provide, when the lane (C3) is determined to be added, direction guidance regarding a course to be changed in the road section in which the lane (C3) is not yet added, and lane guidance in the road section in which the lane (C3) is added.

4. The navigation apparatus according to claim 1, 2 or 3, wherein
the route guidance unit (20) is adapted to provide the lane guidance in the road section in which the lane (C3) is added, when the road which is taken after the course change is a narrow-angle branch road (B) having a predetermined angle or smaller with respect to a road which is a road (A) to be taken when the vehicle travels straight on the road (C) on which it is currently traveling.

5. The navigation apparatus according to any one of claims 1 to 4, wherein
the road which is taken after the course change is a road (B) dedicated to the added lane (C3).

6. The navigation apparatus according to any one of claims 1 to 5, further comprising:
a travel lane determining unit (20) adapted to determine a travel lane (C1, C2, C3), wherein
the route guidance unit (20) adapted to provide, when the road on which the vehicle is traveling is the guidance target road (C) of the course change and the vehicle is traveling on the added lane (C3), guidance which guides to travel along the lane (C3).

7. A navigation program including program code which, when run in a computer performs the steps of
obtaining a travel route;
obtaining a current position of a vehicle (P1 to P8);
providing guidance regarding the obtained travel route corresponding to the obtained current position (P1 to P8);
determining whether or not a road on which the vehicle is traveling is a guidance target road (C) of a course change in the obtained travel route; and
determining, when the road on which the vehicle is traveling is the guidance target road (C) of the course change, whether or not a lane (C3) is added to correspond to a road (B) which is taken after the course change, wherein
the route guidance function switches, when it is determined that the lane (C3) is added, guidance contents between in a road section in which the lane (C3) is added and in a road section in which the lane (C3) is not yet added.
